# EUROPEAN PATENT SPECIFICATION

(11) **EP 2 335 141 B1**
(45) Date of publication and mention of the grant of the patent: **20.12.2017**
(21) Application number: 09784163.9
(22) Date of filing: 25.08.2009
(51) Int. Cl.: G06F 3/042, G06F 3/03

(54) **INTERACTIVE DISPLAY DEVICE WITH INFRARED CAPTURE UNIT**
INTERAKTIVE ANZEIGEANORDNUNG MIT INFRAROTERFASSUNGSEINHEIT
DISPOSITIF D'AFFICHAGE INTERACTIF AVEC UNITÉ DE SAISIE INFRAROUGE

(30) Priority: 26.08.2008 FI 20085794
(43) Date of publication of application: 22.06.2011
(73) Proprietor: MultiTaction Oy, 00150 Helsinki (FI)
(72) Inventor: ILMONEN, Tommi, FI-02110 Espoo (FI)
(74) Representative: Espatent Oy
(86) International application number: PCT/FI2009/050672
(87) International publication number: WO 2010/023358

(56) References cited:
- US-A1- 2007 046 625
- US-A1- 2008 150 913
- US-A1- 2009 161 037

## Description

### FIELD OF THE INVENTION

The present invention generally relates to an interactive display device.

### BACKGROUND OF THE INVENTION

There are interactive displays which comprise a projector or a Liquid Crystal Display panel to form an image on a surface, a camera behind the surface and computer vision circuitry for detecting user input.

US 2001/0012001 A1 discloses one such display system. This system comprises a semi-transparent screen and an infrared LED (light emitting diode) panel, a CCD (charge coupled device) camera and a projector provided on the back side of the semitransparent screen. The camera operates on infrared wavelengths and detects infrared light reflected from objects on the other side of the semitransparent screen, when the objects are relatively close to the screen or when they touch the screen. The projector projects visible image light onto the screen. Infrared component of the image projected by the projector may be filtered out. Thereby the projected image does not disturb the camera.

ACM publication "ThinSight: Integrated Optical Multi-touch Sensing through Thin Form-factor Displays" by Izadi et al. discloses another type of interactive displays.

In this publication individual infrared emitter/detector pairs placed behind backlight of an LCD (liquid crystal display) display are used to detect objects on or in the vicinity of the LCD display, the LCD display thus operating as an interactive display. The use of an LCD display may overcome many of the problems of the projector-based interactive screens. The disclosed technology however requires number of infrared emitter/detector pairs to be mounted on the system, if input is to be detected on a larger area, whereby production of such interactive displays is laborious and thus high costs may be involved.

Detecting of an object on the surface of the display with an IR camera is also obscured by sunshine or other strongly IR-emitting illuminators such as halogen lamps. In the absence of ambient IR light, the display may illuminate objects on or near its surface by means of IR illumination, but it is very difficult to counter excessive ambient IR illumination. For instance, one known technology for detecting a finger touching the display surface is to detect when an image of the finger becomes crisp. A diffusive screen attached to the display surface results in a touching finger blocking IR light from being diffused by the diffusive screen under the finger and a relatively sharp shadow is formed conforming to the shape of the contact. However, under strong, coherent light such as sunshine, any object casts a sharp shadow on the camera even from relatively long distance. Hence, it may be impossible to detect a contact simply from the sharpness of the shadow. Moreover, under strong ambient IR light the IR camera signal may be flushed with measured light such that it is generally impossible or at least very difficult to distinguish any meaningful picture.

US2008150913 (A1) discloses a self-contained interactive video display system. As per [0129], white visible light illuminators 1272 are arranged along the sides of the system's base, and are covered by backlight cover 1274. Backlight cover 1274 may consist of a material that absorbs near-infrared but transmits visible light in order to reduce the presence of ambient infrared on the screen, and therefore improve the contrast of the image captured by camera 1262. Fig. 12B shows a reflective surface behind the visible light illuminators 1272.

It is an object of the present invention to avoid problems associated with prior art and/or to provide an alternative to the existing technology.

### SUMMARY

According to a first aspect of the invention there is provided an interactive display device as defined by appended claim 1.

Advantageously, inhibiting reflection of infrared light from the rear surface towards the display may substantially prevent ambient infrared components from reflecting from the rear surface and again from any other surface within the device to the infrared light image capture unit so as to facilitate operation under strong and substantially coherent ambient infrared light.

Further advantageously, if a projector is used to produce the image on the display, the infrared light reflection inhibitor may reduce interfering infrared light reflections to the image capture unit originating from heat dissipation of the projector.

It has been now realized that it is advantageous to minimize infrared reflections from behind the infrared capture unit. It is a common practice to use a white or generally reflective rear surface in order to maximize any interior illumination of the pointing object. However, this practice also causes substantial difficulties in subsequent processing of the infrared image.
The interactive display device may further comprise a diffusive screen adjacent to the display such that infrared light travels from the pointing object to the infrared image capture unit through the display and the diffusive screen in this order.

Alternatively or additionally, the infrared reflection inhibitor may comprise an infrared filtering screen substantially covering the rear surface when seen from the side of the display.

Alternatively or additionally, the infrared reflection inhibitor may comprise one or more elements configured to reflect or refract infrared light such that it is substantially prevented from being captured by the infrared capture unit.

The display may comprise a projection layer configured to present an image cast by a projector or non-projected display. The non-projected display may comprise a Liquid Crystal Display (LCD), plasma display, and/or an Organic Light Emitting Diode display (OLED).

The diffusive screen may be integrated with the display.

The device may comprise a touching layer configured to cover the diffusive screen. Advantageously, the touching layer may comprise toughened glass or transparent plastics such as polycarbonate or acryl.

The side surface may comprise a mirror configured to even background illumination of the display.

The interactive display device may further comprise a processor configured to detect a contact area between the pointing object and the device. The processor may be configured to detect candidate contact areas and to identify a candidate contact area as a contacting area based on at least two of the following characteristics of the captured infrared light image: sharpness of the profile of a candidate contact area, dimensions of the candidate contact area, and gradient of the darkness of the suspect contact area.

According to a second aspect of the invention there is provided a method in an interactive display device as defined by appended claim 12.

Various embodiments of the present invention have been illustrated only with reference to certain aspects of the invention. It should be appreciated that corresponding embodiments may apply to other aspects and embodiments as well to produce further non-limiting examples.

### BRIEF DESCRIPTION OF THE DRAWINGS

The invention will be described, by way of example only, with reference to the accompanying drawings, in which:
- Fig. 1: shows a block diagram of a system according to an embodiment of the invention;
- Fig. 2: shows a simplified block diagram of the structure of a control unit shown in Fig. 1 according to an embodiment of the invention;
- Fig. 3: shows a simplified block diagram of an infrared reflection inhibition according to an embodiment of the invention;
- Fig. 4: shows a simplified block diagram of an infrared reflection inhibition according to another embodiment of the invention; and
- Fig. 5: shows a simplified block diagram of an infrared reflection inhibition according to yet another embodiment of the invention.

### DETAILED DESCRIPTION

In the following description, like numbers denote like elements.

In the following examples of various embodiments of the invention an LCD screen is used as an example of a display. The LCD screen may comprise a film that forms a visible image and optionally also other elements such as background illumination, infrared (IR) illumination, incoming IR intensity detection across the LCD film, and/or one or more speakers for outputting sound. It is appreciated that the invention may likewise be applied with any other types of displays as well, or screens for simpler expression. Generally, a display is any means for producing a visible image for a user, such as an electric display, a screen displaying a projected image or a substance carrying printed, dyed image, or woven image. However, the display should be sufficiently transparent or translucent for IR light that is used for detecting a pointing object through the display as will be explained in more detail in the following.

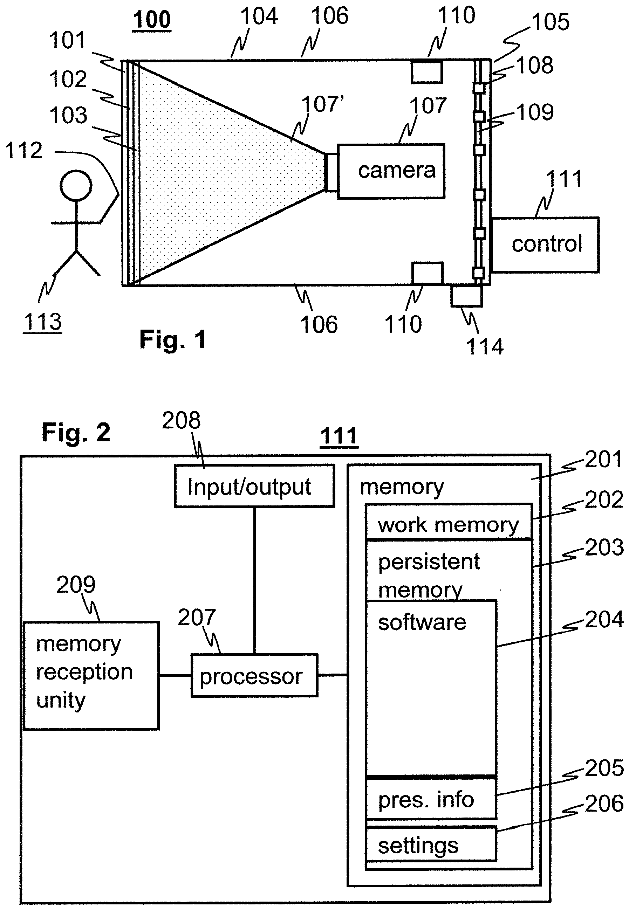

Fig. 1 shows a block diagram of a system 100 according to an embodiment of the invention. Fig. 1 also shows a user 113 for facilitating the description of particular order of different elements. The system 100 is suited for use as an interactive user interface device e.g. as a built in dynamic menu in a restaurant, as a display screen at a ticket office, or generally wherever an interactive display and optical pointing recognition is desired.

The system 100 comprises as an outmost element or as facing to the user 113 a touching layer 101 such as a toughened glass plate, then an LCD film 102 and a diffusion layer 103 behind the LCD film. Preferably, the touching layer, the LCD film 102 and the diffusion layer 103 are all in a compact stack such that the distance from the touching layer to the diffusion layer is as low as possible for machine view performance reasons that will be described in more detail in this description.

The purpose of the diffusion layer 103 is to spread the light coming from a background light source (described in the following), so that an image displayed on the LCD film appears even from many directions. This spreading can be achieved with a diffusion film or with a holographic rear-projection film. By placing the diffusion layer 103 behind the LCD film 102, significant advantages may be achieved in comparison to placing the diffusion layer 103 in front of the LCD film 102 or to omitting the diffusion layer 103. Namely, the diffusion layer 103 reducing reflections from the typically glossy backside of the LCD film 102, which reflections may interfere with the recognising of pointing objects. It is also advantageous to locate the diffusion layer 103 behind the LCD film 102 when seen by a user 113, because otherwise it provides an additional reflecting surface between the LCD film 102 and the viewer thus impairing the visual image quality or contrast especially.

In order to support the aforementioned optical elements, there is provided a casing 104. The casing 104 comprises a back wall 105 attached to side walls 106. The side walls are attached from one end to the back wall 105 and from their opposite ends to the touching layer 101, LCD film 102 and diffusion layer 103. A background light source 108 may be located in the casing 104 for background illumination of the LCD film 102. The background light source 108 may comprise, for example, one or more of: LED light, light conductor, fluorescent light, and luminescence light. In general it is advantageous that the background light source emits as little infrared radiation as possible, to reduce the amount of infrared coming from inside the unit.

In an alternative embodiment, the diffusion layer 103 is omitted. This may particularly be the case when an evenly illuminating background light is provided by a luminescence light that in itself provides an even field of illumination on the LCD film 102.

The side walls 106 may be coated from the inner side with reflective material in order to deliver maximum amount of light to the LCD film and finally to users of the system. By means of the reflective side walls one may avoid or at least reduce shadows that may be caused to the background light in the IR image captured by a camera behind the LCD film 102. The reflective side walls may also help in delivering the background light to the LCD film in a way that the light can be spread to the users without allowing users to see details inside the system through the LCD film and at the same time improving the viewing angle of the system. In addition to the reflective side walls (or reflective casing) the diffusion layer 103 may help to achieve this effect. More particularly, the side walls may be for example mirror walls, in which case they do not reflect infrared light back towards the display surface, but lead the infrared light to the back of the unit, where it is absorbed.

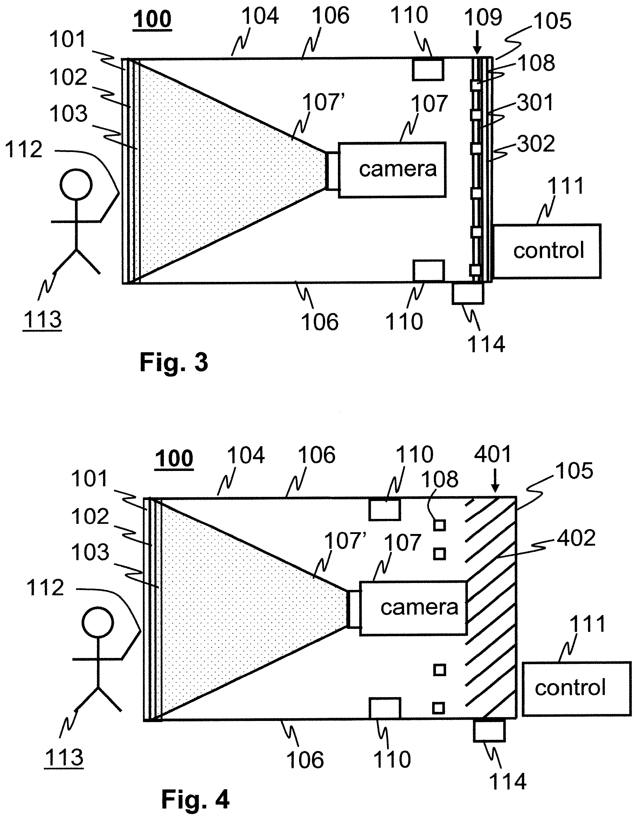

The mirroring side walls may thus help in delivering the background light to the display or LCD film 102 in a way that the light can be spread without allowing the user to see details inside the system through the LCD film 102. Also the viewing angle of the system may be enhanced as appropriate illumination may be perceived over a broad range of viewing angles. In addition to the mirroring side walls (or mirror casing) the diffusion layer 102 i.e. spreading layer may help to achieve this effect. Mirror walls are particularly efficient in providing a consistent background illumination on the LCD film 102. It is appreciated that mirror walls may on one hand contribute to higher risk of harmful glossy reflection to the camera from under the LCD, as any reflection from the back of the system is consistently mirrored towards the LCD film 102. However, the spreading layer 103 when placed under the LCD film 102 provides a further synergic effect by reducing the gloss behind the LCD as experienced by the camera. Hence, any remainder of such reflections is more smoothly reflected on the camera and thus impairs significantly less the detection of shadows through the LCD 102. This is particularly useful under bright daylight. Glossy reflections are further substantially reduced by inhibiting IR light reflection from the back of the device, as will be explained with further detail with reference to Figs. 3 to 5.

The mirroring side walls 106 can also be used to guide the optional internal infrared illumination to the screen even in the cases when there is no diffuse background light. This is particularly the case when for example one is using a projector to create the visible image. In this case a simple reflective material (for example white paper) would be harmful to the image quality as external light coming through the display would be partially reflected and / or back-scattered back to the projection screen. The mirror-like material however reflects visible light towards the infrared absorbing layer 109, which may also be configured to absorb visible light. It is appreciated that this type of a system can also be combined with mirrors which are typically used in projection systems to reduce projection distance.

Inside the casing, there is an image capture unit 107 that is in this particular case an IR camera configured to see through the diffusion layer 103, LCD film 102 and the touching layer 101 any objects placed near or at the touching layer 101. Further in Fig. 1, there is drawn as a dotted area an IR light reception space 107' for the IR camera. The camera is configured to detect signals that are outside the visible light wavelengths. There may be for example a filter in front of the lens of the camera providing this effect. The camera may be based on for example CCD (charge-coupled device) or CMOS (complementary metal-oxide-semiconductor) technology. Moreover, the image capture unit 107 may comprise more than one camera e.g. for better resolution, for smaller distance between the screen and the cameras, or for covering larger LCD screens 102.

The distance between the background light source 108 and the diffusion layer 103 may generally depend on the space that the camera setup requires. The distance may be shortened for more compact sized system e.g. by moving the camera forward and/or turning the camera around (to point away from the screen) and using a mirror or prism in front of the camera to capture the activities on the screen.

Alternatively, the image capture unit 107 may be formed of a planar sensing structure that has a number of sensors spread over a plane to recognize intensity of incoming light through each pixel or pixel block of the LCD film 102. Such a structure may also function as a visible light and/or IR illumination behind the LCD film 102 for the purpose of background illuminating the LCD screen and/or illuminating objects in front of the LCD screen under weak ambient IR illumination. In case of a planar sensing structure operating as an image capture unit 107, there is no IR light reception space 107' as that drawn in Fig. 1 but instead there is merely a small parallel space between the LCD film 102 and the image capture unit 107.

The camera 107 and the IR LEDs 110 may not be seen from the outside of the system if their shadow is negligent e.g. due to the highly diffused illumination coming from the background lights and as the reflective inner side of the system evens further the illumination of the display surface. Further, the diffusion layer 103 may prevent the users from seeing any details from inside the system.
A camera as the IR image capture unit typically provides a more economical solution than a plurality of emitter/detector pairs that are typically used in a planar illumination and sensing element. First, the area covered by one camera typically requires a relatively high number of emitter/detector pairs thus incurring a relatively high number of components and wires. Second, production of the system may be simpler when a camera is used. On the other hand, by using emitter/detector pairs in a planar image capture unit, the size of the system may be reduced and there is no need for accurately positioning and directing the camera in a desired angle with regard to the LCD film 102.
The system 100 may further comprise an IR reflection inhibitor 109 configured to reduce reflection of IR light from the back wall and again from any elements in front of the camera 107. The IR reflection inhibitor 109 may comprise, for instance, a black plate such as a sooted aluminum plate placed around the background light source 108 or behind the background light source 108. An example of an IR absorbing IR reflection inhibitor 109 is further described in the following in conjunction with Fig. 3. Additionally, IR reflection inhibitor 109 may comprise, for instance, a directionally refractive or reflective element such as one or more prisms configured to direct IR light to such a direction that the amount of IR light reflection to the camera 107 is significantly reduced. An example of a directionally reflective IR reflection inhibitor 109 is further described in the following in conjunction with Fig. 4.

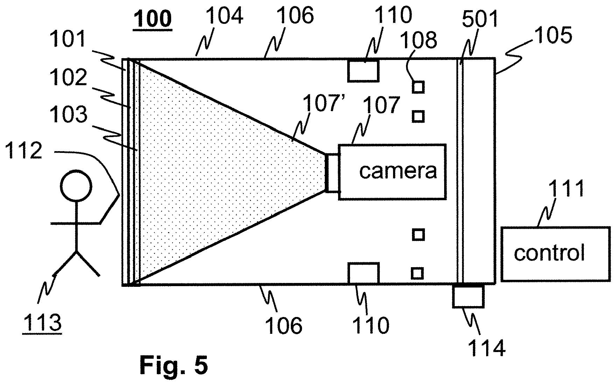

Further still, the IR reflection inhibitor 109 may comprise additionally a selective screen between the back wall and the IR light reception space 107'. An example of a selective screen arrangement is further described in the following in conjunction with Fig. 5.

A screen that filters out IR light may be simply arranged e.g. in a plane configuration behind the camera parallel to the back wall 105 in sake of simple installation. Alternatively, the screen may be conically arranged partly on the front side of the camera 107 when seen from the direction of the user 113. While a planar configuration is economical and simple to arrange, conical or different curved arrangements may further enhance the operation of the IR reflection inhibitor 109, whether implemented using a filter or an absorbing surface. Namely, there is always an amount of reflection and by suitably shaping the IR reflection inhibitor 109 it may be possible to further reduce reflections of IR light all the way from the outside of the case 104 through the LCD and back and forth inside the case 104 to the camera 104.

The IR reflection inhibitor 109 may significantly facilitate determining the location, distance, orientation and other properties of a pointing object 112 from the IR image. The method simplifies the operation of computer vision algorithms as it becomes easier to control the amount of infrared light coming from inside the interactive display. In particular one can use the (optional) internal infrared-illumination when there is little ambient infrared light available, and rely on the ambient infrared when it is stronger. As one can eliminate (or at least largely reduce) the IR emission from inside the display in the latter case the imaging system can capture images with better contrast. Good contrast in turn improves the image quality by increasing the signal-to-noise ratio of the image, thus making the realization of various computer vision algorithms easier. For example, it becomes possible to determine when an object 112 is touching the surface 101 by analyzing the properties of the shadow cast by the object. If there were significant IR radiation coming from inside the unit, then it would be difficult to tell how the light reflection from object 112 is affects the image. This is particularly relevant as the light-reflection properties of object 112 may not be exactly known, so the reflection is difficult to normalize by a computer vision algorithm. Further, the properties of infrared light emitted/reflected from the unit are typically not exactly known and complicate the image processing/normalization.

Further, the system may comprise or be configured to provide an interface for connecting thereto a control unit 11, which is configured to control operation of the system and/or to detect the pointing object 112.

Additionally the system 100 may comprise IR light sources 110 enabling input detection on IR wavelengths. The IR light sources may be for example IR LEDs placed outside the angle of view of the image capture unit. In case that a camera is used as the image capture unit, the IR light sources 110 may be located outside a cone formed by the view area of the camera. On the other hand, if a planar image capture unit behind or integrated with the LCD screen is used, the LCD screen itself may be configured to provide the IR illumination across its view area or the IR illumination may be configured to be produced such that it illuminates objects at the LCD screen without first passing through the LCD screen.

The system 100 may further still comprise an audio speaker 114 for providing audible signals to the user 113. The system may be configured to e.g. provide a tapping sound to indicate determined tapping on the touching surface 101 for enhancing user experience of an operable system and to teach users that there is no need for applying substantial force against the touching surface when the recognition of the pointing object 112 is optically performed.

Fig. 2 shows a simplified block diagram of the structure of the control unit 111. The control unit 111 may be based on, for example, a general purpose computer supplied with suitable software and / or on a particularly adapted computing device. While it is possible to implement the control unit 111 by a purely hardware based device, typically the control unit 111 is more economic and faster to manufacture by making use of software.

In Fig. 2, the control unit 111 is drawn to comprise a memory 201 that comprises a work memory 202, a non-volatile memory 203 that is configured to store software 204, presentation information 205 describing content to be presented by the system 100 and/or how pointing at different areas on the screen should be treated, and settings 206 needed e.g. for manual or automatic calibration of the system 100. The software 204 may comprise any one or more of the following items: operating system, device drivers, display presentation application, hypertext markup language parser, image processing software, and drivers for different external equipment that may be connected to the system such as printers, further displays, further interactive systems 100, audio systems, and external IR illumination equipment (not shown).

The control unit 111 further comprises a processor 207 configured to control the operation of the control unit 111 according to the software 204 by executing computer executable program code contained by the software in the work memory 202. Alternatively, the control unit may be configured to execute the software in place in the non-volatile memory in which case the work memory may not be necessary. The control unit further comprises an input/output unit (I/O) 208 for exchanging signals with other elements of the system 100 and optionally also with external equipment. The I/O 208 may comprise e.g. any one or more of a universal serial bus port, a local area network port, a wireless local area network port, an ISA bus, a PCI express port, an IR port, a Bluetooth element, and a parallel port. Alternatively to being configured capable of communicating with external equipment, the system 100 may be provided with a transferable memory reception unit 209 such as a cd-rom or dvd-rom drive, memory card reader or memory stick reader which enables replacing part of the non-volatile memory e.g. for updating information to be displayed on the LCD screen 102.

In order to control the operation of various components of the system and to obtain the captured image, there are connections between the control unit or particularly its input/output unit 208 and other components of the system 100, while not shown in sake of clarity of the drawing. The control unit has generally the task of receiving a signal from the camera 107, detecting if and where the touching layer 101 is pointed at and typically also outputting the determination in a standard way e.g. emulating a computer drawing tablet, mouse or other known pointing device.

Generally, the control unit operation may comprise following acts:
- controlling the LCD film to show desired images to the user 113
- controlling the IR lights 110 to produce IR light on demand for showing a pointing object 112 such as a user's 113 finger when brought close to the LCD film
- obtaining signals corresponding to received IR light from the image capture unit 107
- detecting from the received signals the pointing object at the touching surface 101
- performing a predefined action based on the detected input, e.g. changing the image displayed on the LCD film 102 or following a hyperlink associated with the area at which the pointing object is detected
- detecting the amount of ambient IR light controlling the IR lights 110 accordingly

It is appreciated that while the control unit may consist of one separate unit, the control unit 111 may alternatively be integrated with any other element or comprise two or more discreet elements each for one or more of the aforementioned acts.

Fig. 3 shows a simplified block diagram of an infrared reflection inhibition according to an embodiment of the invention. The IR reflection inhibitor 109 comprises an IR absorbing material layer 301 covering the back wall 105 in the casing 104 and acts as a rear surface for the space in which the image capture unit 107 is positioned when arranged in accordance with the system shown in Fig. 1. In one embodiment, the absorbing layer is deposited or otherwise arranged onto a light metal plate 302 such as an aluminum, titanium or magnesium plate such that the plate acts as a substrate for the absorbing layer. The plate may also stiffen the structure of the casing 104. The absorbing material is advantageously at least partly reflective in the visible light frequency range so as to enhance back illumination of the display, if back illumination is desired as e.g. in case of LCD display. In case of a projector display is used to provide an image on the display (instead of LCD film 102), the IR reflection inhibitor need not be reflective to visible light.

Fig. 4 shows a simplified block diagram of an infrared reflection inhibition according to another embodiment of the invention. A redirecting element 401 i.e. directionally refractive or reflective element is placed behind the image capture space 107', preferably near the back wall 105. The redirection element 401 may comprise a plurality of IR light redirection parts 402 i.e. individual reflection or refraction parts configured to direct IR light that has passed the image capture unit 107 to one or more directions from which the IR light should not to a significant extent end up to the image capture unit 107 even after a sequence of reflections within the casing. In Fig. 4, a series of relatively long mirrors 402 is drawn in a dense group such that incident light reflects to the back of adjacent mirror. The backs are preferably substantially IR absorbing. Thanks to the length and orientation of the mirrors in comparison to relatively small spacing of the mirrors, the IR light arriving through the display 102 has to reflect a number of times from the back of mirrors and once from the back wall of the casing. This results in a negligent total IR light reflection from behind the image capture space 107' to the image capture unit 107.

In one embodiment, the individual IR light redirection parts are configured to direct IR light roughly sideways towards the side walls. In this case, the side walls may be arranged substantially IR light absorbent at the region exposed to redirected IR light. In yet another embodiment, the redirection element 401 is configured to direct the IR light to an area significantly smaller than that from which the IR light is received by the redirection element 401. In this case, however, the destination of the IR light may heat up to substantial temperatures unless particular cooling measures are taken as generally known in the field of heat transfer.

It is appreciated that Fig. 4 like other block diagrams of the system 100 shows some basic elements of the system 100 in a planar drawing. In a three-dimensional system, however, different parts may be arranged at different locations in the direction against the plane of the drawings.

Fig. 5 shows a simplified block diagram of an infrared reflection inhibition according to yet another embodiment of the invention. In this embodiment, an IR light absorbing screen 501 is provided between the back wall 105 and the IR light reception space 107'.

It is advantageous to place the IR light absorbing screen 501 outside the IR light reception space 107' in order to avoid absorbing IR light needed by the image capture unit 107 to obtain the IR image based on which the pointing object is seen. While it is possible to arrange an annular screen around the IR light reception space 107', it is simpler to construct a system in which a uniform film connects opposite side walls 106 behind the camera. In this case, the screen may reside on either side of the background illumination 108 (if present). If the IR light absorption screen 501 resides such that the background illumination has to pass through the IR light absorption screen, then the IR light absorption screen has to be selective i.e. substantially absorptive for the IR light frequencies used by the image capture unit but not for the visible light of the background illumination 108. Fig. 5 shows the screen operationally behind the background illumination 108 so that the IR absorbing screen need not even be selectively absorbing for IR light. Regardless whether the IR light absorbing screen locates operationally in front or behind any background illumination 108 (if present), the IR light that arrives at the back wall 105 has had to pass through the IR absorbing screen 501 once. A first portion of the IR light in the range of the image capture unit that reaches the back wall 105 absorbs to the back wall (the more so the more IR light absorbent the back wall is), while a second portion of that IR light reflects and again arrives at the IR absorbing screen 501. Hence, if ambient IR light passes through the transparent layers (touching layer 101, display 102, and diffusion layer 103) and reflects from the back wall 105 and again from the diffusion layer to the image capture unit, the intensity of such light is greatly reduced at the stage it reaches the image capture unit.

It is advantageous to combine using of the absorbing rear surface with using of the IR absorbing screen. Further, any other combination of different features in ambient IR light absorption may also be used.
The foregoing description has provided by way of non-limiting examples of particular implementations and embodiments of the invention a full and informative description of the best mode presently contemplated by the inventors for carrying out the invention.
Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. An interactive display device (100) comprising a side surface (106); and mechanically connected to the side surface:
a rear surface (105);
a display (102) for producing to a user (113) an image visible from outside of the device;
background illumination (108) behind the display (102) when seen from the side of the user; an infrared light image capture unit (107) configured to capture an infrared image of a pointing object (112) through the display (103) when the pointing object (112) is brought near the display (102); and
an infrared reflection inhibitor (109;301,302;401,402;501) between the display (102) and the rear surface (105) configured to enable the infrared image capture unit (107) to capture the infrared image of the pointing object (112) whilst inhibiting reflection of infrared light from the rear surface (105) towards the display (102); **characterized in that**
the infrared reflection inhibitor (109;301,302;401,402;501) comprises an infrared absorbing layer around the background light illumination (108) or behind the background light illumination (108), substantially covering the rear surface when seen from the side of the display;
wherein the infrared reflection inhibitor (109;301,302;401,402;501) comprises a black plate (109;302).

2. An interactive display device according to claim 1, **characterized in that** the infrared reflection inhibitor (109;301,302;401,402;501) further comprises an infrared filtering screen substantially covering the rear surface when seen from the direction of the display.

3. An interactive display device (100) according to claim 1 or 2, **characterized in that** the interactive display device (100) further comprises a diffusive screen (103) adjacent to the display (102) such that infrared light travels from the pointing object to the infrared image capture unit (107) through the display (102) and the diffusive screen (103) in this order.

4. An interactive display device according to any one of the preceding claims, **characterized in that** the infrared reflection inhibitor (109;301,302;401,402; 501) further comprises one or more elements configured to reflect or refract infrared light such that the reflected or refracted infrared light is substantially prevented from being captured by the infrared image capture unit.

5. An interactive display device according to claim 3, **characterized in that** the diffusive screen is integrated with the display.

6. An interactive display device according to any one of the preceding claims, **characterized in that** the device further comprises a touching layer configured to cover the diffusive screen.

7. An interactive display device according to any one of the preceding claims, **characterized in that** the side surface (106) comprises a mirror configured to even background illumination of the display (102) in the wavelengths visible to the human eye.

8. An interactive display device according to any one of the preceding claims, **characterized in that** the side surface (106) comprises a mirror configured to even possible background illumination of the display (102) in the wavelengths visible to the infrared image capture unit.

9. An interactive display device according to any one of the preceding claims, **characterized in that** the display comprises a non-projected display unit such as a Liquid Crystal Display (LCD), plasma display, and/or an Organic Light Emitting Diode display (OLED).

10. An interactive display device according to any one of the preceding claims, **characterized in that** the display device further comprises a processor configured to detect a contact area between the pointing object and the device.

11. An interactive display device according to claim 10, **characterized in that** the processor is configured to detect candidate contact areas and to identify a candidate contact area as a contacting area based on at least two of the following characteristics of the captured infrared light image: sharpness of the profile of a candidate contact area, dimensions of the candidate contact area, and gradient of the darkness of the suspect contact area.

12. A method in an interactive display device (100) comprising a side surface (106); and mechanically connected to the side surface:
a rear surface (105);
a display (103) for producing to a user (113) an image visible from outside of the device;
background illumination (108) behind the display (102) when seen from the side of the user;
an infrared light image capture unit (107) configured to capture an infrared image of a pointing object (112) through the display (103) when the pointing object (112) is brought near the display (102); **characterized in that** the method comprises:
absorbing, using a black plate (109;302) to provide an infrared absorbing layer around the background light illumination (108) or behind the background light illumination (108), substantially covering a rear surface of the display (103) when seen from the side of the display, infrared light that arrives at the rear surface and thus inhibiting reflection of infrared light from the rear surface (105) towards the display (102).

13. A method according to claim 12, further comprising diffusing infrared light by a diffusive screen (103) adjacent to the display (102) such that infrared light travels from the pointing object to the infrared image capture unit (107) through the display (102) and the diffusive screen (103) in this order.

14. A method according to claim 12 or 13, further comprising reflecting or refracting infrared light with one or more elements such that the reflected or refracted infrared light is substantially prevented from being captured by the infrared image capture unit.

## Patentansprüche

1. Interaktive Anzeigevorrichtung (100), die eine Seitenfläche (106) umfasst; und mechanisch mit der Seitenfläche verbunden:
eine hintere Fläche (105);
eine Anzeige (102) zum Produzieren eines Bildes für einen Benutzer (113), das von außerhalb der Vorrichtung sichtbar ist;
Hintergrundbeleuchtung (108) hinter der Anzeige (102), wenn von der Seite des Benutzers gesehen; eine Infrarotlichtbilderfassungseinheit (107), die dazu ausgelegt ist, ein Infrarotbild eines zeigenden Objekts (112) durch die Anzeige (103) zu erfassen, wenn das zeigende Objekt (112) in die Nähe der Anzeige (102) gebracht wird; und
eine Infrarotreflexionssperre (109; 301, 302; 401, 402; 501) zwischen der Anzeige (102) und der hinteren Fläche (105), die dazu ausgelegt ist, es der Infrarotbilderfassungseinheit (107) zu erlauben, das Infrarotbild des zeigenden Objekts (112) zu erfassen, während eine Reflexion von Infrarotlicht von der hinteren Fläche (105) zur Anzeige (102) gesperrt ist; **dadurch gekennzeichnet, dass**
die Infrarotreflexionssperre (109; 301, 302; 401, 402; 501) eine Infrarotabsorptionsschicht um die Hintergrundlichtbeleuchtung (108) herum oder hinter der Hintergrundlichtbeleuchtung (108) umfasst, die im Wesentlichen die hintere Fläche abdeckt, wenn von der Seite der Anzeige gesehen; wobei die Infrarotreflexionssperre (109; 301, 302; 401, 402; 501) eine Rückplatte (109; 302) umfasst.

2. Interaktive Anzeigevorrichtung nach Anspruch 1, **dadurch gekennzeichnet, dass** die Infrarotreflexionssperre (109; 301, 302; 401, 402; 501) ferner einen Infrarotfilterschirm umfasst, der im Wesentlichen die hintere Fläche abdeckt, wenn aus Richtung der Anzeige gesehen.

3. Interaktive Anzeigevorrichtung (100) nach Anspruch 1 oder 2, **dadurch gekennzeichnet, dass** die interaktive Anzeigevorrichtung (100) ferner einen diffusiven Schirm (103) umfasst, der der Anzeige (102) benachbart ist, derart, dass das Infrarotlicht vom zeigenden Objekt durch die Anzeige (102) und den diffusiven Schirm (103) zur Infrarotbilderfassungseinheit (107) in dieser Reihenfolge geleitet wird.

4. Interaktive Anzeigevorrichtung nach einem der vorhergehenden Ansprüche, **dadurch gekennzeichnet, dass** die Infrarotreflexionssperre (109; 301, 302; 401, 402; 501) ferner ein oder mehrere Elemente umfasst, die dazu ausgelegt sind, Infrarotlicht derart zu reflektieren oder zu brechen, dass im Wesentlichen verhindert wird, dass das reflektierte oder gebrochene Infrarotlicht von der Infrarotbilderfassungseinheit erfasst wird.

5. Interaktive Anzeigevorrichtung nach Anspruch 3, **dadurch gekennzeichnet, dass** der diffusive Schirm in die Anzeige integriert ist.

6. Interaktive Anzeigevorrichtung nach einem der vorhergehenden Ansprüche, **dadurch gekennzeichnet, dass** die Vorrichtung ferner eine Berührungsschicht umfasst, die dazu ausgelegt ist, den diffusiven Schirm abzudecken.

7. Interaktive Anzeigevorrichtung nach einem der vorhergehenden Ansprüche, **dadurch gekennzeichnet, dass** die Seitenfläche (106) einen Spiegel umfasst, der dazu ausgelegt ist, Hintergrundbeleuchtung der Anzeige (102) in den Wellenlängen zu glätten, die für das menschliche Auge sichtbar sind.

8. Interaktive Anzeigevorrichtung nach einem der vorhergehenden Ansprüche, **dadurch gekennzeichnet, dass** die Seitenfläche (106) einen Spiegel umfasst, der dazu ausgelegt ist, mögliche Hintergrundbeleuchtung der Anzeige (102) in den Wellenlängen zu glätten, die für die Infrarotbilderfassungseinheit sichtbar sind.

9. Interaktive Anzeigevorrichtung nach einem der vorhergehenden Ansprüche, **dadurch gekennzeichnet, dass** die Anzeige eine nicht projizierte Anzeigeeinheit umfasst, wie etwa eine Flüssigkristallanzeige (Liquid Crystal Display, LCD), Plasmaanzeige und/oder eine Anzeige mit organischen lichtemittierenden Dioden (Organic Light Emitting Diode, (OLED).

10. Interaktive Anzeigevorrichtung nach einem der vorhergehenden Ansprüche, **dadurch gekennzeichnet, dass** die Anzeigevorrichtung ferner einen Prozessor umfasst, der dazu ausgelegt ist, einen Berührungsbereich zwischen dem zeigenden Objekt und der Vorrichtung zu detektieren.

11. Interaktive Anzeigevorrichtung nach Anspruch 10, **dadurch gekennzeichnet, dass** der Prozessor dazu ausgelegt ist, Berührungsbereichskandidaten zu detektieren und einen Berührungsbereichskandidaten auf Basis von mindestens zwei der folgenden Eigenschaften des erfassten Infrarotlichtbildes als Berührungsbereich zu identifizieren: Schärfe des Profils eines Berührungsbereichskandidaten, Abmessungen des Berührungsbereichskandidaten und Gradient der Dunkelheit des suspekten Berührungsbereichs.

12. Verfahren bei einer interaktiven Anzeigevorrichtung (100), die eine Seitenfläche (106) umfasst; und mechanisch mit der Seitenfläche verbunden:
eine hintere Fläche (105);
eine Anzeige (103) zum Produzieren eines Bildes für einen Benutzer (113), das von außerhalb der Vorrichtung sichtbar ist;
Hintergrundbeleuchtung (108) hinter der Anzeige (102), wenn von der Seite des Benutzers gesehen;
eine Infrarotlichtbilderfassungseinheit (107), die dazu ausgelegt ist, ein Infrarotbild eines zeigenden Objekts (112) durch die Anzeige (103) zu erfassen, wenn das zeigende Objekt (112) in die Nähe der Anzeige (102) gebracht wird; **dadurch gekennzeichnet, dass** das Verfahren Folgendes umfasst:
Absorbieren unter Verwendung einer Rückplatte (109; 302), um eine Infrarotabsorptionsschicht um die Hintergrundlichtbeleuchtung (108) herum oder hinter der Hintergrundlichtbeleuchtung (108) bereitzustellen, die im Wesentlichen eine hintere Fläche der Anzeige (103) abdeckt, wenn von der Seite der Anzeige gesehen, von Infrarotlicht, das an der hinteren Fläche ankommt und so eine Reflexion von Infrarotlicht von der hinteren Fläche (105) zur Anzeige (102) sperrt.

13. Verfahren nach Anspruch 12, das ferner das Diffundieren von Infrarotlicht durch einen diffusiven Schirm (103) umfasst, der der Anzeige (102) benachbart ist, derart, dass das Infrarotlicht vom zeigenden Objekt durch die Anzeige (102) und den diffusiven Schirm (103) zur Infrarotbilderfassungseinheit (107) in dieser Reihenfolge geleitet wird.

14. Verfahren nach Anspruch 12 oder 13, das ferner das Reflektieren oder Brechen von Infrarotlicht mit einem oder mehreren Elementen umfasst, derart, dass im Wesentlichen verhindert wird, dass das reflektierte oder gebrochene Infrarotlicht von der Infrarotbilderfassungseinheit erfasst wird.

## Revendications

1. Dispositif d'affichage interactif (100) comprenant une surface latérale (106) ; et raccordé mécaniquement à la surface latérale :
une surface arrière (105) ;
un écran (102) pour produire à un utilisateur (113) une image visible de l'extérieur du dispositif ;
une illumination d'arrière-plan (108) derrière l'écran (102) quand vu du côté de l'utilisateur ; une unité de capture d'image à lumière infrarouge (107) configurée pour capturer une image infrarouge d'un objet de pointage (112) à travers l'écran (103) lorsque l'objet de pointage (112) est approché de l'écran (102) ; et
un inhibiteur de réflexion infrarouge (109 ; 301 ; 302 ; 401, 402 ; 501) entre l'écran (102) et la surface arrière (105) configuré pour permettre à l'unité de capture d'image infrarouge (107) de capturer l'image infrarouge de l'objet de pointage (112) tout en inhibant la réflexion de lumière infrarouge à partir de la surface arrière (105) vers l'écran (102) ; **caractérisé en ce que**
l'inhibiteur de réflexion infrarouge (109 ; 301, 302 ; 401, 402 ; 501) comprend une couche absorbante d'infrarouge autour de l'illumination lumineuse d'arrière-plan (108) ou derrière l'illumination lumineuse d'arrière-plan (108), recouvrant substantiellement la surface arrière quand vu du côté de l'écran ;
dans lequel l'inhibiteur de réflexion infrarouge (109 ; 301 ; 302 ; 401, 402 ; 501) comprend une plaque arrière (109 ; 302).

2. Dispositif d'affichage interactif selon la revendication 1, **caractérisé en ce que** l'inhibiteur de réflexion infrarouge (109 ; 301, 302 ; 401, 402 ; 501) comprend en outre un écran de filtrage d'infrarouge recouvrant substantiellement la surface arrière quand vu à partir de la direction de l'écran.

3. Dispositif d'affichage interactif (100) selon la revendication 1 ou 2, **caractérisé en ce que** le dispositif d'affichage interactif (100) comprend en outre un écran diffusant (103) adjacent à l'écran (102) de sorte que la lumière infrarouge circule de l'objet de pointage à l'unité de capture d'image infrarouge (107) à travers l'écran (102) et l'écran diffusant (103) dans cet ordre.

4. Dispositif d'affichage interactif selon une quelconque des revendications précédentes, **caractérisé en ce que** l'inhibiteur de réflexion infrarouge (109 ; 301, 302 ; 401, 402 ; 501) comprend en outre un ou plusieurs éléments configurés pour réfléchir ou réfracter une lumière infrarouge de sorte que la lumière infrarouge réfléchie ou réfractée soit substantiellement empêchée d'être capturée par l'unité de capture d'image infrarouge.

5. Dispositif d'affichage interactif selon la revendication 3, **caractérisé en ce que** l'écran diffusant est intégré dans l'écran.

6. Dispositif d'affichage interactif selon une quelconque des revendications précédentes, **caractérisé en ce que** le dispositif comprend en outre un écran tactile configuré pour couvrir l'écran diffusant.

7. Dispositif d'affichage interactif selon une quelconque des revendications précédentes, **caractérisé en ce que** la surface latérale (106) comprend un miroir configuré pour une illumination d'arrière-plan uniforme de l'écran (102) dans les longueurs d'onde visibles à l'oeil humain.

8. Dispositif d'affichage interactif selon une quelconque des revendications précédentes, **caractérisé en ce que** la surface latérale (106) comprend un miroir configuré pour une éventuelle illumination d'arrière-plan uniforme de l'écran (102) dans les longueurs d'ondes visibles à l'unité de capture d'image infrarouge.

9. Dispositif d'affichage interactif selon une quelconque des revendications précédentes, **caractérisé en ce que** l'écran comprend une unité d'écran non projetée telle qu'un écran à cristaux liquides (LCD), un écran plasma et/ou un écran à diodes électroluminescentes organiques (OLED).

10. Dispositif d'affichage interactif selon une quelconque des revendications précédentes, **caractérisé en ce que** le dispositif d'affichage comprend en outre un processeur configuré pour détecter une zone de contact entre l'objet de pointage et le dispositif.

11. Dispositif d'affichage interactif selon la revendication 10, **caractérisé en ce que** le processeur est configuré pour détecter des zones de contact candidates et identifier une zone de contact candidate comme une zone de contact sur la base d'au moins deux des caractéristiques suivantes de l'image de lumière infrarouge capturée : netteté du profil d'une zone de contact candidate, dimensions de la zone de contact candidate et gradient de la netteté de la zone de contact suspecte.

12. Procédé dans un dispositif d'affichage interactif (100) comprenant une surface latérale (106) ; et raccordé mécaniquement à la surface latérale :
une surface arrière (105) ;
un écran (103) pour produire à un utilisateur (113) une image visible de l'extérieur du dispositif ;
une illumination d'arrière-plan (108) derrière l'écran (102) quand vu du côté de l'utilisateur ;
une unité de capture d'image à lumière infrarouge (107) configurée pour capturer une image infrarouge d'un objet de pointage (112) à travers l'écran (103) lorsque l'objet de pointage (112) est approché de l'écran (102) ; **caractérisé en ce que** le procédé comprend de :
absorber, en utilisant une plaque arrière (109 ; 302) pour fournir une couche absorbante d'infrarouge autour de l'illumination lumineuse d'arrière-plan (108) ou derrière l'illumination lumineuse d'arrière-plan (108), recouvrant substantiellement une surface arrière de l'écran (103) quand vu du côté de l'écran, une lumière infrarouge qui arrive au niveau de la surface arrière et en empêchant ainsi la réflexion de lumière infrarouge à partir de la surface arrière (105) vers l'écran (102).

13. Procédé selon la revendication 12, comprenant en outre de diffuser une lumière infrarouge par un écran diffusant (103) adjacent à l'écran (102) de sorte que la lumière infrarouge circule de l'objet de pointage à l'unité de capture d'image infrarouge (107) à travers l'écran (102) et l'écran diffusant (103) dans cet ordre.

14. Procédé selon la revendication 12 ou 13, comprenant en outre de réfléchir ou réfracter une lumière infrarouge avec un ou plusieurs éléments de sorte que la lumière infrarouge réfléchie ou réfractée soit substantiellement empêchée d'être capturée par l'unité de capture d'image infrarouge.
